# EUROPÄISCHE PATENTANMELDUNG

(11) **EP 4 517 783 A1**
(43) Veröffentlichungstag der Anmeldung: **05.03.2025**
(21) Anmeldenummer: 23194037.0
(22) Anmeldetag: 29.08.2023
(51) Int. Cl.: H01B 3/40, H01B 3/46, H02K 3/38, H02K 15/12, H02K 1/04, C08L 63/00, C08L 83/04

(54) **HARZSYSTEM UND VERFAHREN ZUM IMPRÄGNIEREN, VERFESTIGEN ODER ELEKTROISOLIEREN EINES WICKLUNGSTRAGENDEN KÖRPERS**

(71) Anmelder: Siemens Aktiengesellschaft, 80333 München (DE)
(72) Erfinder: Heinl, Dieter, 91085 Weisendorf (DE); Katzenberger, Tobias, 97631 Bad Königshofen STT Untereßfeld (DE); Plochmann, Bastian, 91413 Neustadt an der Aisch (DE)
(74) Vertreter: Siemens Patent Attorneys

(57) **Zusammenfassung**

Die vorliegende Erfindung betrifft ein Harzsystem, wobei das Harzsystem als Zweikomponenten-System ausgestaltet ist und als eine erste Komponente ein Harz umfasst und als zweite Komponente einen Härter zum Härten des Harzes aufweist, wobei die erste Komponente und die zweite Komponente wie folgt aufeinander abgestimmt sind:
- Das Teile-nach-Volumen-Mischungsverhältnis liegt bei 3 Teilen Harz zu 1 Teil Härter bis 1 Teil Harz zu 3 Teilen Härter; und
- Das Verhältnis der Viskositäten der ersten Komponente und der zweiten Komponente liegen in einem Bereich von 1 zu 5 bis 5 zu 1.

## Beschreibung

Die vorliegende Erfindung betrifft ein Harzsystem aufweisend ein Harz und einen Härter. Die vorliegende Erfindung betrifft ferner die Verwendung eines derartigen Harzsystems in einem Verfahren zum Imprägnieren, Verfestigen oder Elektroisolieren einer Wicklung tragenden Körpers sowie ein Verfahren zum Imprägnieren, Verfestigen oder Elektroisolieren einer Wicklung tragenden Körpers.

Niederspannungsmotoren werden im Zuge des Herstellungsprozesses mittels eines flüssigen Harzes imprägniert, welches im Anschluss meist durch Zugabe von Temperatur über eine gewisse Zeit gehärtet wird und somit einen duroplastischen Formstoff und eine wirksame elektrische Isolation (EIS) und mechanische Verfestigung der Wicklung ergibt.

EP 3 872 962 A1 betrifft ein Verfahren zum Imprägnieren, Verfestigen oder Elektroisolieren eines ein- oder mehrlagige Wicklungen tragenden Körpers, insbesondere für eine elektrische Maschine, wobei der die Wicklungen tragende Körper in ein mehrkomponentiges Harzsystem getaucht wird oder mit dem mehrkomponentigen Harzsystem beträufelt wird oder mit dem mehrkomponentigen Harzsystem besprüht wird. Dieses Dokument betrifft ferner eine elektrische Maschine, insbesondere ein Motor, Generator oder Transformator, imprägniert, verfestigt oder elektroisoliert nach einem derartigen Verfahren sowie eine Verwendung eines mehrkomponentigen Harzsystems zur Imprägnierung, Verfestigung oder Elektroisolierung einer elektrischen Maschine.

Aus dem Stand bekannte Lösungen weisen jedoch noch weiteres Verbesserungspotential auf, insbesondere hinsichtlich einer bestmöglichen Verarbeitbarkeit eines Harzsystems zum Imprägnieren, Verfestigen oder Elektroisolieren einer Wicklung tragenden Körpers.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung bereitzustellen, durch welche eine gute Verarbeitbarkeit eines Harzsystems zum Imprägnieren, Verfestigen oder Elektroisolieren einer Wicklung tragenden Körpers ermöglicht werden kann.

Die Lösung der Aufgabe erfolgt erfindungsgemäß zumindest zum Teil durch ein Harzsystem mit den Merkmalen des Anspruchs 1. Die Lösung der Aufgabe erfolgt erfindungsgemäß ferner zumindest zum Teil durch ein Verfahren mit den Merkmalen des Anspruchs 7 sowie durch eine Verwendung mit den Merkmalen des Anspruchs 10. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird ein Harzsystem, wobei das Harzsystem als Zweikomponenten-System ausgestaltet ist und als eine erste Komponente ein Harz umfasst und als zweite Komponente einen Härter zum Härten des Harzes aufweist, wobei die erste Komponente und die zweite Komponente wie folgt aufeinander abgestimmt sind:
- Das Teile-nach-Volumen-Mischungsverhältnis liegt bei 3 Teilen Harz zu 1 Teil Härter bis 1 Teil Harz zu 3 Teilen Härter; und
- das Verhältnis der Viskositäten der ersten Komponente und der zweiten Komponente liegen in einem Bereich von 1 zu 5 bis 5 zu 1.

Ein derartiges Harzsystem weist gegenüber Lösungen aus dem Stand der Technik deutlich Vorteile auf, insbesondere bei der Anwendung in einem Verfahren zum Imprägnieren, Verfestigen oder Elektroisolieren eines ein- oder mehrlagige Wicklungen tragenden Körpers. Ein derartiges Verfahren soll im Weiteren insbesondere als Behandeln eines ein- oder mehrlagige Wicklungen tragenden Körpers verstanden werden. Der Körper ist dabei vorteilhaft ein Elektromotorotor oder Generator oder ein Transformator. Der Körper weist vorteilhaft einen Rotor und einen Stator auf.

Das hier beschriebene Harzsystem ist als Zweikomponenten-System ausgestaltet. Es weist somit zwei unterschiedliche Komponenten auf, welche besonders vorteilhaft aufeinander abgestimmt sind, wie dies nachfolgend beschrieben ist.

Das Harzsystem weist als eine erste Komponente ein Harz auf. Als zweite Komponente weist das Harzsystem einen Härter zum Härten des Harzes auf. Zweckmäßigerweise sind Harz und Härter derart aufeinander abgestimmt, um eine Härtung des Harzes in geeigneter Weise durchführen zu können. Eine derartige Anpassung der Art Härters an die Art des Harzes ist für den Fachmann grundsätzlich problemlos möglich.

Die erste Komponente und die zweite Komponente, also das Harz und der Härter, sind dabei zusätzlich zu der rein chemischen Kompatibilität wie folgt aufeinander abgestimmt.

Das Teile-nach-Volumen-Mischungsverhältnis liegt bei 3 Teilen Harz zu 1 Teil Härter bis 1 Teil Harz zu 3 Teilen Härter. Bevorzugt liegt das das Teile-nach-Volumen-Mischungsverhältnis bei 1,5 Teilen Harz zu 1 Teil Härter bis 1 Teil Harz zu 1,5 Teilen Härter. Beispielsweise liegt das Teile-nach-Volumen-Mischungsverhältnis bei 1 Teil Harz zu 1 Teil Härter.

Weiterhin liegt das Verhältnis der Viskositäten der ersten Komponente und der zweiten Komponente, also des Harzes und des Härters, in einem Bereich von 1 zu 5 bis 5 zu 1. Bevorzugt kann das Verhältnis der Viskositäten der ersten Komponente und der zweiten Komponente in einem Bereich liegen von 1 zu 2 bis 2 zu 1. Beispielsweise kann das Verhältnis der Viskositäten der ersten Komponente und der zweiten Komponente in einem Bereich liegen von 1 zu 1. Diese Viskosität beschreibt eine Anfangsviskosität bei 25°C, wobei das relative Viskositätsverhältnis unabhängig von der Temperatur und dem Messverfahren gleich bleibt. Grundsätzlich ist die Viskosität jedoch bestimmbar nach DIN EN ISO 2431:2011.

Es hat sich in überraschender Weise gezeigt, dass die vorbeschriebene Anpassung von Harz und Härter besonders vorteilhafte Eigenschaften erlauben kann. Insbesondere durch die vorbeschriebene Anpassung des Teile-nach-Volumen-Mischungsverhältnisses und des Verhältnisses der Viskositäten von erster und zweiter Komponente, also von Harz und Härter, kann eine besonders vorteilhafte Anwendung insbesondere in einem Verfahren zum Imprägnieren, Verfestigen oder Elektroisolieren eines ein- oder mehrlagige Wicklungen tragenden Körpers, wie etwa eines Bauteils einer elektrischen Maschine beziehungsweise eines Elektromotors, erlaubt werden.

Durch die exakte Einstellung der vorbeschriebenen Parameter sind Temperaturerhöhung während des Träufelprozesses sowie im Anschluss während des Gelier- und Härtungsvorgangs nicht notwendig, um eine sinnvolle Fertigungszeit zu erhalten. Zudem sind günstige, statische Mischrohre verwendbar, wodurch die Einzelkomponenten in-situ gemischt werden können und kein händischer Reinigungsaufwand oder Anlagenstillstandszeiten entstehen.

Erfindungsgemäß sind somit auch unter Verwendung einfacher und günstiger Anlagentechnologie die beschriebenen Verfahren problemlos umsetzbar, wobei ferner hochqualitative Produkte entstehen.

Insbesondere kann eine mangelhafte Nutfüllung mit dem Harz aufgrund zu hoher Viskosität und/oder Reaktivität verhindert oder zumindest deutlich reduziert werden. Eine hierzu im Stand der Technik oftmals notwendige Kippstellung des zu imprägnierenden Bauteils, wie etwa des rollierenden Stators, ist somit nicht notwendig, so dass auf diesbezügliche vergleichsweise kostenintensive Anlagenkonzepte verzichtet werden kann.

Die verwendeten chemischen Harzkomponenten und jeweiligen Fertigungsverfahren sind dabei eng aufeinander sowie auf den Produktbedarf, wie etwa die Anforderung an das zu imprägnierende Bauteil, beispielsweise den Motor beziehungsweise die Motorkomponente, abstimmbar. Hier sind insbesondere prozesskritische Parameter wie die Reaktivität, also die Zeit bis zur Gelierung bei einer bestimmten Temperatur, Volumenschrumpf bei der Härtung sowie die Freisetzung flüchtiger Bestandteile, wie etwa Reaktivverdünner, z.B. Styrol, zu nennen. Zudem sind die Parameter nach der Härtung, wie mechanische und elektrische Festigkeit, dielektrische Eigenschaften, Glasübergangstemperatur sowie thermische Beständigkeit relevant und im Rahmen der Erfindung für den Fachmann gut einstellbar.

Es ist ferner denkbar, dass zur Imprägnierung, Verfestigung oder Elektroisolierung im Rahmen der vorliegenden Erfindung ein 3K-Harzsystem eingesetzt wird. Additive zu einer, vorzugsweis zeitverzögerten, Thixotropierung können einen viskositätserhöhenden Effekt im Hinblick auf eine Gelierung beschleunigen. Dies hat eine Steigerung einer Fertigungseffizienz zur Folge, insbesondere im Hinblick auf eine Taktzeit.

Es kann weiterhin bevorzugt sein, dass das Harzsystem ein raumtemperaturhärtendes System ist. Dadurch kann das Verfahren besonders einfach und kostengünstig ausführbar sein. Es kann somit in dieser Ausgestaltung verhindert werden, dass eine zu geringe Reaktivität durch eine Temperaturerhöhung des zu behandelnden Körpers entweder vor, während oder nach der Behandlung, wie etwa dem Träufelvorgang, kompensiert werden muss, was zum einen den Anlageninvest erhöhen würde, etwa durch einen vorzusehenden Induktor oder Heißluftofen, und zum anderen durch notwendige Energie die Kosten steigert. Unter einem raumtemperaturhärtenden System ist dabei ein solches zu verstehen, welches bei 22°C aushärtet.

Hinsichtlich des Harzes kann es weiter bevorzugt sein, dass das Harz ausgewählt ist aus einem Epoxyharz, einem Silikonkautschuk, einem Polyurethan und einem Polyester. Es hat sich gezeigt, dass insbesondere unter Verwendung derartiger Harze das Harzsystem bei dem beschriebenen Verfahren gut umsetzbar ist. Spezifische Beispiele umfassen etwa Epoxyharze oder Bisphenol-F-Epichlorhydrinharze.

Der Härter sollte hinsichtlich seines Härtungsmechanismus an das Harz angepasst sein. Besonders bevorzugt kann hier ein Aminhärter verwendet werden beziehungsweise kann es von Vorteil sein, dass der Härter einen Aminhärter umfasst, wie etwa 2,4,6-Tri-(dimethylaminomethyl)phenol. Ein Amin basierte Härter bringt den Vorteil mit sich, dass die Aushärtung bei Raumtemperatur erfolgen kann, somit eine auch Kalthärtung bezeichnete Härtung möglich ist. Epoxyharz ist aufgrund seiner ausgeprägten mechanischen Eigenschaften vorteilhaft und hat nur eine kleine Volumenänderung während des Aushärtens zur Folge. Epoxyharz beinhaltet vorteilhaft keine Lösemittel und weist ein VOC < 1Gew.-% auf (volatile organic compounds, kurz VOC), d.h. es dampfen weniger als 1 Gew.-% des gesamten Materials im Laufe des Härtungsvorgangs ab.

Hinsichtlich weiterer technischer Merkmale und Vorteile des Harzsystems wird auf die Beschreibung des Verfahrens, der Verwendung, die Beispiele und die Figuren verwiesen.

Beschrieben wird ferner ein Verfahren zum Imprägnieren, Verfestigen oder Elektroisolieren eines ein- oder mehrlagige Wicklungen tragenden Körpers, wobei der die Wicklungen tragende Körper in ein mehrkomponentiges Harzsystem getaucht wird oder mit dem mehrkomponentigen Harzsystem beträufelt wird oder mit dem mehrkomponentigen Harzsystem besprüht wird, wobei das Harzsystem ein solches ist, wie vorstehend beschrieben.

Es ergeben sich somit insbesondere die vorstehend mit Bezug auf das Harzsystem beschriebenen Vorteile. Insbesondere kann durch die Anpassung der beschriebenen Parameter eine einfache und kostengünstige Anlagentechnologie verwendet werden, welche etwa passive Mischer umfasst, wobei dennoch ein hochqualitatives Ergebnis ermöglicht wird.

In einer vorteilhaften Ausführungsform der Erfindung wird der die Wicklungen tragende Körper bei Raumtemperatur in das mehrkomponentige Harzsystem getaucht oder mit dem mehrkomponentigen Harzsystem beträufelt oder mit dem mehrkomponentigen Harzsystem besprüht. Wie vorstehend angedeutet erlaubt dies eine besonders kostengünstige und wenig aufwändige Anlagentechnik, welche ferner kostengünstig betreibbar ist.

Beispielsweise kann es von Vorteil sein, dass der die Wicklungen tragende Körper bei einer Umgebungstemperatur von 15 bis 25°C, insbesondere 20 bis 23°C, in das mehrkomponentige Harzsystem getaucht oder mit dem mehrkomponentigen Harzsystem beträufelt oder mit dem mehrkomponentigen Harzsystem besprüht wird.

In einer weiteren vorteilhaften Ausführungsform der Erfindung wird der die Wicklungen tragende Körper auf eine Temperatur von 30 bis 80°C, insbesondere 30 bis 60°C, vorgewärmt. Vorzugsweise wird der die Wicklungen tragende Körper auf eine Temperatur von 30 bis 80°C, insbesondere 30 bis 60°C, induktiv vorgewärmt. Dies hat den Vorteil, dass unterschiedliche Umgebungstemperaturen, z. B. im Sommer oder Winter, keinen Einfluss auf das Imprägnieren, Verfestigen oder Elektroisolieren haben. Der die Wicklungen tragende Körper weist umgebungstemperaturunabhängig zu Beginn des Verfahrens zur Imprägnierung, Verfestigung oder Elektroisolierung beispielsweise eine definierte Temperatur auf und kühlt dann ab.

Die Erfindung bietet den weiteren Vorteil, dass eine Weiterarbeit, wie etwa eine Anbringung eines Lagerschildes, welche aufgrund thermischer Ausdehnungskoeffizienten erst bei Raumtemperatur möglich ist, zeitnah nach der Imprägnierung durchgeführt werden kann. Es ist keine aktive Kühlung notwendig. Ferner muss auch keine Verzögerung unter Nutzung von Lagerfläche aufgrund einer Abkühlzeit bei Raumtemperatur in Kauf genommen werden. Eine kosten- und zeiteffiziente Fertigung ist somit möglich.

Zudem entfällt der eingangs erwähnte hohe Energieverbrauch zum Aufheizen der Wicklung mit Strömen von beispielsweise mehr als 500 A. Zur Steuerung dieser Ströme ist zudem eine sehr aufwendige Leistungselektronik in einer Fertigungsanlage erforderlich. Auch dies entfällt durch die Erfindung.

Die Erfindung bietet ferner den Vorteil, dass in einer Fertigungshalle keine Flächen bereitgestellt werden müssen, auf welchen die imprägnierten Körper über oftmals mehrere Tage oder sogar Wochen abkühlen und aushärten. Dies hat positive wirtschaftliche Effekte zur Folge.

In einer weiteren vorteilhaften Ausführungsform rotiert der Körper um eine Achse, wenn der Körper in ein mehrkomponentiges Harzsystem getaucht wird oder mit dem mehrkomponentigen Harzsystem beträufelt wird oder mit dem mehrkomponentigen Harzsystem besprüht wird. Vorteilhaft befindet sich der Körper hierzu auf einer Rollier-Station.

Es kann weiterhin von Vorteil sein, dass die erste Komponente und die zweite Komponente getrennt voneinander gefördert werden, wobei die erste Komponente und die zweite Komponente unmittelbar vor dem Tauchen oder vor der Beträufelung oder vor der Besprühung zum mehrkomponentigen Harzsystem vermischt werden. Unmittelbar bedeutet dabei vorzugsweise einen Zeitraum von maximal 10 min.

Vorteilhaft beim Mischen der ersten und zweiten Komponente ist insbesondere das beschriebene Verhältnis der Viskositäten und der Teile nach Volumen-Verhältnisse. Dies erlaubt in besonders vorteilhafter Weise auch einen statischen Mischer. Entsprechend ist es von Vorteil, dass die erste Komponente und die zweite Komponente in einem statischen Mischer miteinander vermischt werden.

Durch die Rotation des Körpers wird ein Abtropfen des Harzsystems, insbesondere des Harzes, verhindert. Durch vorhandene Kapillarkräfte wird das Harz in die Nuten gezogen und geliert dort innerhalb weniger Minuten. Eine Tropffreiheit soll nach max. 20 min erreicht sein. Der Körper kann ohne lange aushärten und/oder abkühlen zu müssen, von der Rollier-Station entnommen werden und weiterbearbeitet werden.

Hinsichtlich weiterer technischer Merkmale und Vorteile des Verfahrens wird auf die Beschreibung des Harzsystems, der Verwendung, die Beispiele und die Figuren verwiesen.

Beschrieben wird ferner eine Verwendung eines Harzsystems wie vorstehend beschrieben zum Imprägnieren, Verfestigen oder Elektroisolieren einer Wicklung tragenden Körpers.

Hinsichtlich weiterer technischer Merkmale und Vorteile der Verwendung wird auf die Beschreibung des Harzsystems, das Verfahren, die Beispiele und die Figuren verwiesen.

Weitere Einzelheiten, Merkmale und Vorteile des Gegenstandes der Erfindung ergeben sich aus den Unteransprüchen sowie aus der nachfolgenden Beschreibung der Figuren. In den Figuren zeigen:
FIG 1: das Imprägnierverfahren,
FIG 2: eine beispielhafte Anlage zur Durchführung des Imprägnierverfahrens; und
FIG 3: eine dynamoelektrische rotatorische Maschine während des Imprägnierverfahrens.

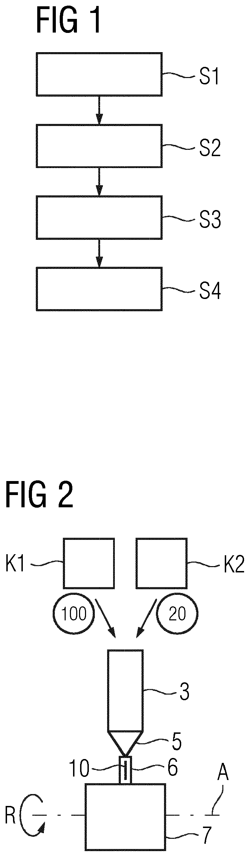

FIG 1 zeigt das Imprägnierverfahren. In einem ersten Verfahrensschritt werden eine erste Komponente K1 und eine zweite Komponente K2 bereitgestellt. Die erste Komponente K1 ist ein Harz, die zweite Komponente K2 ist ein Härter. Die beiden Komponenten werden in einem Verfahrensschritt S2 getrennt gefördert. In einem Verfahrensschritt S3 werden die beiden Komponenten zu einem mehrkomponentigen Harzsystem 10, in diesem Fall einem zweikomponentigen Harzsystem, gemischt und, vorzugsweise unmittelbar nach der Mischung, auf einen Körper 7 aufgebracht bzw. in den Körper 7 eingebracht.

Es sind auch mehr als zwei Komponenten möglich.

In einem Verfahrensschritt S4 wird durch die Rotation des Körpers 7 das mehrkomponentige Harzsystem 10 in Hohlräumen im Körper 7 verteilt. Ist der Körper 7 beispielsweise ein Stator, wird das mehrkomponentige Harzsystem 10 in den Nuten verteilt.

FIG 2 zeigt eine beispielhafte Anlage zur Durchführung des Imprägnierverfahrens.

Die erste Komponente Kl und die zweite Komponente K2 werden in einem Mischrohr 3 zum mehrkomponentigen Harzsystem 10 vermischt und als Strahl 6 durch eine Düse 5 auf den Körper 7 ausgegeben. Der Körper rotiert in Rotationsrichtung R um eine Achse A. Das Mischrohr ist bevorzugt ein statischer Mischer.

Die Träufelanlage aus Figur 2 umfasst somit zwei getrennte Förder- und Dosiersystemen 20, 100 welche die beiden Komponenten, also Harz und Härter, beinhalten. Die Mischung beider Komponenten soll in einer technisch günstigen Ausführung über ein handelsübliches statisches Mischrohr 3 geschehen, welches durch seine mäanderförmige Fließweg-Anordnung eine Verwirbelung und damit homogene Mischung der beiden Volumenströme in-situ, also während des Durchfließens, gewährleistet. Das statische Mischrohr 3 selbst ist hierbei beispielsweise ein kostengünstiges Einwegprodukt, welches nach Stand- und Wartungszeiten der Anlage problemlos ausgetauscht werden kann, sofern das darin befindliche Reaktivgemisch bereits geliert oder teilweise gehärtet ist und somit eine Zwischenspülung mit Träufelharz zur schnellen Reinigung der Anlage nicht mehr möglich ist.

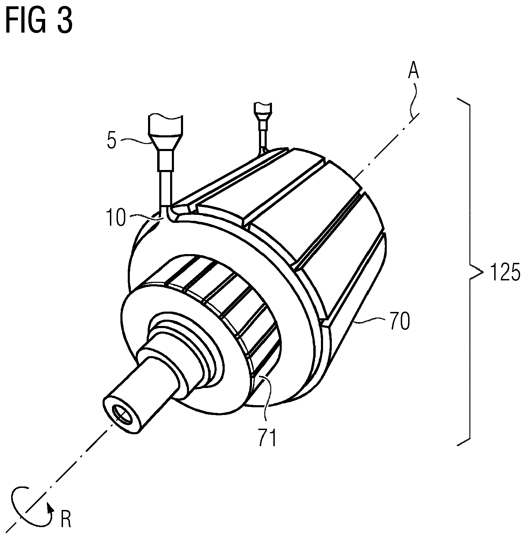

FIG 3 zeigt eine dynamoelektrische rotatorische Maschine 12 während des Imprägnierverfahrens. Die Figur zeigt einen Stator 70 und einen Rotor 71 einer elektrischen Maschine. Durch die Düse 5 trifft das mehrkomponentige Harzsystem 10 in der Figur auf den Stator 70, während der Stator 70 in Rotationsrichtung R um die Achse A rotiert.

Während weiterer Fertigungsschritte sind Rotor 71 und/oder Stator 72 meist erhöhter Temperaturen ausgesetzt. Es folgen z. B. ca. 80°C Wicklungstemperatur beim Aufschrumpfen des 200°C heißen Alu-Gehäuses und eine Kurzschlussprüfung als Endprüfung mit einer frei wählbaren Aufheizung der Wicklung. Eine nahezu 100%ige Härtung des Harzsystems, sofern chemisch überhaupt möglich, ist vor der Fertigstellung gesichert.

Ohne thermische Folgeprozesse ist die Härtung des Harzsystems innerhalb weniger Tage abgeschlossen. Ein Fertigungsfluss wird nicht gestört, da es sich bereits nach wenigen Minuten um ein tropffreies Produkt handelt, welches keine oder einer nur eine geringe Klebrigkeit der Oberfläche aufweist.

Es hat sich in überraschender Weise gezeigt, dass insbesondere die erfindungsgemäße Anpassung von erster und zweiter Komponente aneinander hier besondere Vorteile bieten, indem sie etwa eine ausreichende Mischbarkeit auch durch ein statisches System sicherzustellen vermögen.

Dies wird bei der Diskussion der Beispiele weiter erläutert.

### Beispiele:

Erfindungsgemäß sind folgende Anforderungen an die Komponenten des Verfahrens zu richten.
- Die Viskositäten der einzelnen Komponenten überschreiten bevorzugt den Wert von jeweils 5000mPas bei Raumtemperatur nicht;
- Das Teile-nach-Volumen-Mischungsverhältnis liegt bei 3 Teilen Harz zu 1 Teil Härter bis 1 Teil Harz zu 3 Teilen Härter, wobei 1:1 technisch besonders bevorzugt wären;
- Das Verhältnis der Viskositäten des Harzes und des Härters liegen in einem Bereich von 1 zu 5 bis 5 zu 1 wobei wiederum 1:1 besonders bevorzugt wäre.

Es konnten die folgenden Ergebnisse gefunden werden.

Tabelle 1 zeigt zunächst verschiedene Kombinationen von Harz und Härter beziehungsweise von erster und zweiter Komponente.

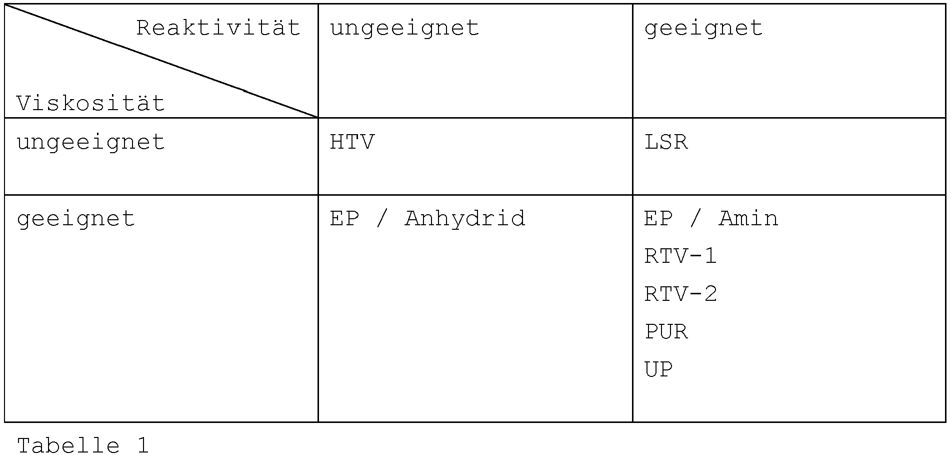

Ferner zeigt Tabelle 2 die Reaktivität des Harz/Härter-Gemisches bei entsprechenden Initialviskositäten des Gemisches aus Harz und Härter und bei verschiedenen Achslängen es zu behandelnden Körpers, wobei Achslängen (AL) sich auf die jeweiligen Körper beziehen.

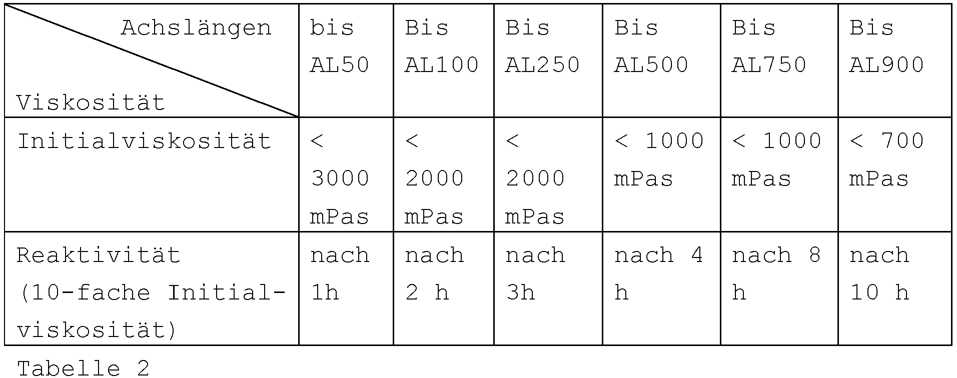

Dabei sollen die in den Tabellen 1 und 2 genannten Abkürzungen wie folgt verstanden werden:
EP / Amin: aminisch gehärtete Epoxidharzformulierung
EP / Anhydrid: anhydridisch gehärtete Epoxidharzformulierung RTV-1: 1-komponentige raumtemperaturvernetzende Silikonkautschuke (kondensationsvernetzend)
RTV-2: 2-komponentige raumtemperaturvernetzende Silikonkautschuke (additions- und kondensationsvernetzend)
LSR: Flüssigsilikonkautschuk (platinvernetzend)
HTV: Festsilikonkautschuk (additions- und kondensationsvernetzend)
PUR: Polyurethane als Reaktionsprodukte handelsüblicher Diisocyanate sowie deren niederviskosen Präpolymeren und Polyether-/Polyesterpolyolen
UP: Ungesättigte Polyester als Kondensationsprodukte handelsüblicher Diole (z.B.: Ethylenglycol, 1,3-Butandiol) und Dicarbonsäuren/Anhydriden (z.B.: Phthalsäureanhydrid, Maleinsäureanhydrid) gelöst in Vinylmonomeren, beschleunigt und peroxidisch gehärtet.

Gegenüber Harzsystemen aus dem Stand der Technik ergeben sich dabei deutliche Vorteile, wie dies in der Tabelle 3 gezeigt ist, welche bei verschiedenen Ausgestaltungen des Harzsystems jeweils die Verarbeitbarkeit zeigt. Diese umfasst insbesondere die Mischbarkeit von Harz und Härter, was anwendungsbezogen deutliche Vorteile mit sich bringt.

**Tabelle 3**

| Nr. | Teile-zu-VolumenVerhältnis [K1 zu K2] | Verhältnis der Viskositäten [K1 zu K2] | Verarbeitbarkeit |
|---|---|---|---|
| 1 | 1/1 | 1/1 | ++ |
| 2 | 1/3 | 1/1 | ++ |
| 3 | 3/1 | 1/1 | ++ |
| 4 | 1/1 | 1/5 | ++ |
| 5 | 1/1 | 5/1 | ++ |
| 6 | 1/5 | 1/1 | + |
| 7 | 5/1 | 1/1 | + |
| 8 | 1/1 | 1/7 | + |
| 9 | 1/1 | 7/1 | + |

Es hat sich somit gezeigt, dass durch eine erfindungsgemäße Anpassung von Harz und Härter deutliche Vorteile bei der Handhabung in einem Verfahren zum Imprägnieren, Verfestigen oder Elektroisolieren eines ein- oder mehrlagige Wicklungen tragenden Körpers ermöglicht werden können.

Unabhängig vom grammatikalischen Geschlecht eines bestimmten Begriffes sind Personen mit männlicher, weiblicher oder anderer Geschlechteridentität mit umfasst.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 3: Mischrohr
- 5: Düse
- 6: Strahl
- 7: Befestigungsstruktur
- 10: Harzsystem
- 20: Förder- und Dosiersystem
- 70: Stator
- 71: Rotor
- 100: Förder- und Dosiersystem
- 125: rotatorische Maschine
- A: Achse
- K1: Komponente 1
- K2: Komponente 2
- R: Rotationsrichtung
- S1: Verfahrensschritt
- S2: Verfahrensschritt
- S3: Verfahrensschritt
- S4: Verfahrensschritt

## Patentansprüche

1. Harzsystem (10), wobei das Harzsystem als Zweikomponenten-System ausgestaltet ist und als eine erste Komponente (K1) ein Harz umfasst und als zweite Komponente (K2) einen Härter zum Härten des Harzes aufweist, wobei die erste Komponente (K1) und die zweite Komponente (K2) wie folgt aufeinander abgestimmt sind:
- Das Teile-nach-Volumen-Mischungsverhältnis liegt bei 3 Teilen Harz zu 1 Teil Härter bis 1 Teil Harz zu 3 Teilen Härter; und
- Das Verhältnis der Viskositäten des Harzes und des Härters liegen in einem Bereich von 1 zu 5 bis 5 zu 1.

2. Harzsystem (10) nach Anspruch 1, **dadurch gekennzeichnet, dass** das Teile-nach-Volumen-Mischungsverhältnis bei 1,5 Teilen Harz zu 1 Teil Härter bis 1 Teil Harz zu 1,5 Teilen Härter liegt.

3. Harzsystem (10) nach Anspruch 1 oder 2, **dadurch gekennzeichnet, dass** das Verhältnis der Viskositäten des Harzes und des Härters in einem Bereich liegen von 1 zu 2 bis 2 zu 1.

4. Harzsystem (10) nach einem der Ansprüche 1 bis 3,
**dadurch gekennzeichnet, dass** das Harzsystem (10) ein raumtemperaturhärtendes System ist.

5. Harzsystem (10) nach einem der Ansprüche 1 bis 4,
**dadurch gekennzeichnet, dass** das Harz ausgewählt ist aus einem Epoxyharz, einem Silikonkautschuk, einem Polyurethan und einem Polyester.

6. Harzsystem (10) nach einem der Ansprüche 1 bis 5,
**dadurch gekennzeichnet, dass** der Härter einen Aminhärter umfasst.

7. Verfahren zum Imprägnieren, Verfestigen oder Elektroisolieren eines ein- oder mehrlagige Wicklungen tragenden Körpers, wobei der die Wicklungen tragende Körper in ein mehrkomponentiges Harzsystem (10) getaucht wird oder mit dem mehrkomponentigen Harzsystem (10) beträufelt wird oder mit dem mehrkomponentigen Harzsystem (10) besprüht wird, **dadurch gekennzeichnet, dass** das Harzsystem (10) ein solches ist nach einem der Ansprüche 1 bis 6.

8. Verfahren nach Anspruch 7, **dadurch gekennzeichnet, dass** die erste Komponente (K1) und die zweite Komponente (K2) in einem statischen Mischer miteinander vermischt werden.

9. Verfahren nach einem der Ansprüche 7 oder 8, **dadurch gekennzeichnet, dass** der Wicklungen tragende Körper Teil einer elektrischen Maschine ist.

10. Verwendung eines Harzsystems (10) nach einem der Ansprüche 1 bis 6 zum Imprägnieren, Verfestigen oder Elektroisolieren einer Wicklung tragenden Körpers.
